# EUROPEAN PATENT APPLICATION

(11) **EP 2 380 685 A1**
(43) Date of publication of application: **26.10.2011**
(21) Application number: 10733419.5
(22) Date of filing: 14.01.2010
(51) Int. Cl.: B22F 1/02, B22F 1/00, B22F 3/00, H01F 41/02, H01F 1/26

(54) **PROCESS FOR PRODUCING METALLURGICAL POWDER, PROCESS FOR PRODUCING POWDER MAGNETIC CORE, POWDER MAGNETIC CORE, AND COIL COMPONENT**

(30) Priority: 22.01.2009 JP 2009012122
(71) Applicant: Sumitomo Electric Industries, Ltd., Chuo-ku Osaka-shi Osaka 541-0041 (JP)
(72) Inventor: MAEDA, Toru, Itami-shi Hyogo 664-0016 (JP); SAKAMOTO, Toshihiro, Itami-shi Hyogo 664-0016 (JP); WATANABE, Asako, Itami-shi Hyogo 664-0016 (JP)
(74) Representative: Setna, Rohan P.
(86) International application number: PCT/JP2010/050320
(87) International publication number: WO 2010/084812

(57) **Abstract**

A process for producing metallurgical powder includes a step of coating surfaces of a plurality of first particles 10 with a first binder 30 and a step of coating a surface of the first binder 30 with a plurality of second particles having a diameter smaller than a particle diameter of the first particles 10. In the step of coating with the second particles 20, a plurality of second particles 20 having a diameter one fifth or less of the particle diameter of the first particles are used.

## Description

### Technical Field

The present invention relates to a process for producing metallurgical powder, a process for producing a dust core, a dust core, and a coil component.

### Background Art

Conventionally, dust cores have been used in electric appliances equipped with electrical circuits, solenoid valves, motors, etc. A dust core is composed of composite magnetic particles each constituted by an iron based particle composed of, for example, pure iron, and an insulating coated film coating the surface of the iron based particle. A dust core is required to achieve a magnetic property that can yield a high flux density by application of a small magnetic field and a magnetic property that can react to an external magnetic field with high sensitivity.

When a dust core is used in an alternating current (AC) magnetic field, an energy loss called an iron loss occurs. The iron loss is expressed as a sum of a hysteresis loss and an eddy current loss. A hysteresis loss is an energy loss that occurs due to the energy needed to change the flux density of the dust core. An eddy current loss is an energy loss that occurs mainly due to an eddy current flowing between iron based particles constituting the dust core. The hysteresis loss is proportional to the operating frequency and the eddy current loss is proportional to the square of the operating frequency. Thus, the hysteresis loss is dominant mainly in the low-frequency range and the eddy current loss is dominant mainly in the high-frequency range. In other words, in an iron loss of a dust core for high-frequency driving, the ratio of the eddy current loss is high. In order to suppress the eddy current loss, the size of the iron based particles needs to be reduced.

However, when the size of the iron based particles is reduced, the flowability is deteriorated. When the flowability is low, the filling property for filling a die with composite magnetic particles is deteriorated. Accordingly, the density of a compact prepared by compacting composite magnetic particles is generally low.

Japanese Unexamined Patent Application Publication No. 2003-188009 (PTL 1) aims to achieve a low iron loss and good direct current (DC) superposed characteristics even in a high-frequency range and describes a composite magnetic material having B/A of 1.6 or more where A denotes a 50% cumulative particle diameter and B denotes a 90% cumulative particle diameter in a particle diameter distribution of Fe-Si-based metal magnetic powder.

PTL 1 describes that powder in a particle size zone A and powder in particle size zone B are mixed, a silicon resin serving as a binder resin is added to the mixture, and the mixture is sized to obtain a powder mixture.

### Citation List

### Patent Literature

[PTL 1] Japanese Unexamined Patent Application Publication No. 2003-188009

### Summary of Invention

### Technical Problem

However, the inventors of the present invention have found that according to the composite magnetic particle disclosed in PTL 1 above, aggregation in the fine particle zone
(A) having a relatively small particle diameter and aggregation in the coarse particle zone
(B) having a relatively large particle diameter occur. Aggregation of fine particles inhibits improvement of the density of a compact prepared by compacting the composite magnetic particles. Aggregation of coarse particles increases the apparent particle diameter since the coarse particles become adjacent to each other, and thus increases the eddy current loss.

An object of the present invention is to provide a process for producing metallurgical powder, a process for producing a dust core, a dust core, and a coil component that can improve the density and suppress the increase in the eddy current loss. Solution to Problem

A process for producing metallurgical powder according to the present invention includes a step of coating surfaces of a plurality of first particles with a first binder, and a step of coating a surface of the first binder with a plurality of second particles having a particle diameter smaller than a particle diameter of the plurality of first particles.

According to the process for producing metallurgical powder of the present invention, a first binder coats the surfaces of the first particles having a relatively large particle diameter and second particles having a relatively small particle diameter coat the surface of the first binder. Thus, the second particles adhere to the surfaces of the first particles and aggregation of the second particles can be suppressed. In other words, aggregation of the first particles can be suppressed and the aggregation of the first particles can be suppressed. Since suppressing aggregation of the second particles improves the flowability, the density can be improved. Moreover, suppressing the aggregation of the first particles can suppress the increase in eddy current loss.

In the process for producing metallurgical powder described above, in the step of coating with the second particles, a plurality of second particles that have a particle diameter one fifth or less of the particle diameter of the first particles are preferably used.

In this manner, the effect of increasing the density and suppressing the increase in eddy current loss can be further intensified.

The process for producing metallurgical powder described above preferably further includes a step of adding a second binder during or after the step of coating with the second particles. In this manner, the properties of the metallurgical powder produced thereby can be adjusted.

In the process for producing metallurgical powder described above, in the step of coating with the first binder, the first particles including first iron based particles and first insulated coated films surrounding the surfaces of the first iron based particles are preferably used, and in the step of coating with the second particles, the second particles including second iron based particles and second insulating coated films surrounding the surfaces of the second iron based particles are preferably used.

In this manner, the first and second particles can electrically insulate between other particles. Thus, when the metallurgical powder is compacted, a compact having a high electrical resistivity can be formed.

A process for producing a dust core according to the present invention includes a step of producing metallurgical powder by the above-described process for producing metallurgical powder, and a step of compacting the metallurgical powder.

Thus, a dust core with improved density in which the increase in eddy current loss is suppressed can be produced.

A dust core of the present invention is produced by the process for producing a dust core described above. Thus, a dust core with improved density in which the increase in eddy current loss is suppressed can be achieved.

A coil component according to the present invention includes the above-described dust core. Thus, a coil component with an improved density in which an increase in eddy current loss is suppressed can be achieved.

### Advantageous Effects of Invention

According to a process for producing metallurgical powder, a process for producing a dust core, a dust, core, and a coil component of the present invention, the density can be improved and the increase in eddy current loss can be suppressed.

### Brief Description of Drawings

[Fig. 1] Figure 1 is a cross-sectional view schematically showing metallurgical powder according to a first embodiment of the present invention.
[Fig. 2] Figure 2 is a flow chart showing a process for producing the metallurgical powder according to the first embodiment of the present invention.
[Fig. 3] Figure 3 is a cross-sectional view schematically showing metallurgical powder of a comparative example.
[Fig. 4] Figure 4 is a cross-sectional view schematically showing metallurgical powder according to a second embodiment of the present invention.
[Fig. 5] Figure 5 is a cross-sectional view schematically showing a dust core according to a third embodiment of the present invention.
[Fig. 6] Figure 6 is a flow chart showing a process for producing the dust core according to the third embodiment.
[Fig. 7] Figure 7 is a cross-sectional view schematically showing a first stage of compacting metallurgical powder.
[Fig. 8] Figure 8 is a cross-sectional view schematically showing a second stage of compacting the metallurgical powder.

### Description of Embodiments

Embodiments of the present invention will now be described with reference to the drawings. In the drawings, the same or corresponding parts are denoted by the same reference symbols and redundant description is omitted.

### (First Embodiment)

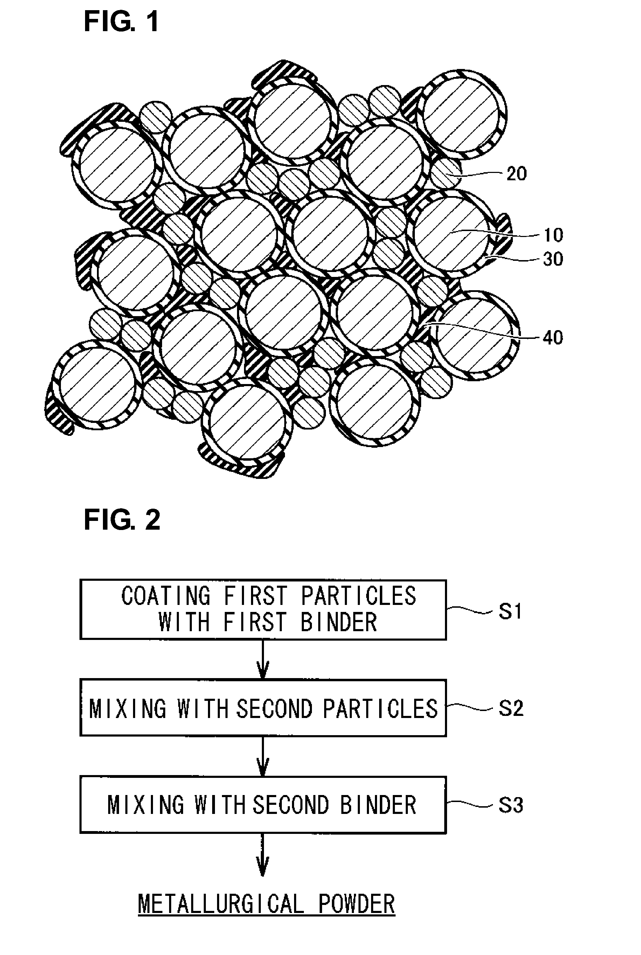

Referring to Fig. 1, metallurgical powder according to an embodiment of the present invention is described. As shown in Fig. 1, the metallurgical powder of this embodiment includes first particles 10, second particles 20, a first binder 30, and a second binder 40. The first binder 30 coats the surfaces of the first particles 10. The second particles 20 coat the surface of the first binder 30. The second binder 40 coats the surface of the second particle 20 and exists in the gap between particles of the metallurgical powder.

The first particles 10 have a diameter larger than that of the second particles 20. Preferably, the particle diameter of the first particles 10 is at least five times that of the second particles 20. The "particle diameter" of the first and second particles refers to an average particle diameter. In a particle diameter histogram, an average particle diameter is a diameter where the total mass of particles having a diameter smaller than that diameter is 50% of the total mass of the particles, i.e., a 50% particle diameter.

The first and second particles 10 and 20 each include an iron based particle. An iron based particle is composed of, for example, iron (Fe), an iron (Fe)-silicon (Si)-based alloy, an iron (Fe)-aluminum (Al)-based alloy, an iron (Fe)-nitrogen (N)-based alloy, an iron (Fe)-nickel (Ni)-based alloy, an iron (Fe)-carbon (C)-based alloy, an iron (Fe)-boron (B)-based alloy, an iron (Fe)-cobalt (Co)-based alloy, an iron (Fe)-phosphorus (P)-based alloy, an iron (Fe)-nickel (Ni)-cobalt (Co)-based alloy, or an iron (Fe)-aluminum (Al)-silicon (Si)-based alloy. The first and second particles 10 and 20 may each be composed of a single metal or an alloy.
The first and second particles 10 and 20 may be composed of the same material or different materials.

The first binder 30 binds the first particles 10 and the second particles 20. The first binder 30 may surround the entire surfaces of the first particles 10 or part of the surfaces of the first particles 10 (not shown). The second particles 20 may surround the entire surface of the first binder 30 (not shown) or part of the surface of the first binder 30.

A thermoplastic resin, a thermosetting resin, or the like may be used as the first and second binders 30 and 40. Specific examples of the first and second binders 30 and 40 include polyimide, polyphenylene sulfide, polyether ketone, silicone resins, silsesquioxanes, titanium-oxygen-based monomers, titanium-oxygen-based oligomers, silicon-oxygen-based monomers, and silicon-oxygen based oligomers. Since these substances have high strength, the strength of the compact can be further improved. Of the silicone resins, dimethyl silicone and methyl phenyl silicone are preferably used. Of silsesquioxanes, oxetane silsesquioxane and vinylhydroxy silsesquioxane are preferably used. Of the titanium-oxygen-based monomers, titanium alkoxide, titanium chelate, and titanium acylate are preferably used. Of the titanium-oxygen-based oligomers, oligomers obtained by oligomerizing the aforementioned monomers are preferably used. Of the silicon-oxygen-based monomers, silicon alkoxide and silicon cyanate are preferably used. Of the silicon-oxygen oligomers, the oligomers obtained by oligomerizing the aforementioned monomers are preferably used. The first and second binders 30 and 40 may be composed of the same material or different materials.

The metallurgical powder of this embodiment may include the first particles 10 and the second particles 20 only or may further include powder such as copper powder. Although the metallurgical powder of this embodiment contains iron based particles, particles other than iron based particles may be contained.

Next, a process for producing the metallurgical powder of this embodiment is described.
As shown in Figs. 1 and 2, surfaces of the first particles 10 are coated with the first binder 30 (step S1). In this embodiment, first particles 10 including iron based particles are used.

In particular, for example, iron based particles composed of the aforementioned material are prepared. Although the process of producing the iron based particles is not particularly limited, a gas atomization method, a water atomization method, or the like may be employed. Subsequently, the iron based particles are heat-treated. The interior of the iron based particles before the heat treatment has many defects such as crystal grain boundaries and strains resulting from thermal stresses applied during the atomization treatment. Heat-treating the iron based particles can reduce these defects. The heat treatment may be omitted. Thus, the first particles 10 are prepared.

The diameter of the first particles 10 is, for example, 50 to 70 µm. When the particle diameter of the first particles 10 is 50 µm or more, the increase in coercive force and hysteresis loss of the dust core prepared by using such a metallurgical powder can be suppressed. When the diameter is 70 µm or less, the eddy current loss that occurs in the high-frequency range of 1 kHz or higher can be effectively decreased.

Then a first binder 30 composed of the aforementioned material is prepared. Using an agitating mixer that can heat the inside of the mixing container, the first particles 10 and the first binder 30 are mixed. While mixing, the temperature inside the mixing container is increased to melt the first binder 30. After the elapse of a particular amount of time, the temperature inside the mixing container is decreased and mixing of the first binder 30 and the first particles 10 is continued until the first binder 30 is solidified. As a result, the first binder 30 is solidified and adhered to the surfaces of the first particles 10 while suppressing the molten first binder 30 to flow out from the surfaces of the first particles 10 and suppressing the first particles 10, which are coated with the first binder 30, from sticking to each other. Consequently, as shown in Fig. 1, the surfaces of the first particles 10 can be coated with the first binder 30. As mentioned earlier, it is sufficient for the first binder 30 to coat part of the surfaces of the first particles 10.

The temperature of the mixing container may be increased after mixing of the first iron based particles 11 and the first binder 30 is started as in the aforementioned case, or, the temperature in the mixing container may be increased in advance to a temperature at which the first binder 30 melts and then mixing may be started by placing the first particles 10 and the first binder 30 in the mixing container.

The mixing method is not particularly limited. For example, any of a mixer such as a V-type mixer, a vertical tumbler mixer, a vibratory ball mill, and a planetary ball mill can be used. Mixing may simply be conducted at room temperature, or a treatment may be carried out in which a lubricant is liquefied under an increased temperature to coat the particles and then stabilized by cooling.

Next, the surface of the first binder 30 is coated with second particles 20 having a diameter smaller than that of the first particles 10 (step S2). In step S2, second particles 20 having a diameter 1/5 or less of the diameter of the first particles are preferably used.
In this case, the difference in diameter between the first and second particles 10 and 20 is distinct. Thus, the effect achieved by the coarse first particles 10 and the effect achieved by the fine second particles can be clearly exhibited.

In particular, the second particles 20 are prepared as with the first particles 10. In this embodiment, second particles 20 including iron based particles are used. The second particles 20 are prepared by basically the same process as the first particles except that the second particles 20 have a smaller diameter than the first particles 10.

The second particles 20 are then mixed with the first particles 10 coated with the first binder 30 by using an agitating mixer. As a result, the surface of the first binder 30 can be coated with the second particles 20. As discussed earlier, it is sufficient for the second particles 20 to coat part of the surface of the first binder 30.

Here, the average particle diameter of the second particles 20 is 10 µm or more and less than 50 µm. When the average particle diameter of the second particles is 10 µm or more, the coating area is not excessive relative to the first particles 10. Thus, aggregation of the second particles 20 in the metallurgical powder can be prevented, and the decrease in density of the dust core prepared therefrom can be suppressed. The average particle diameter is less than 50 µm since the difference in particle diameter between the first and second particles 10 and 20 in the metallurgical powder is not small and the decrease in the density of the dust core prepared therefrom can be suppressed.

The first particles 10 and the second particles 20 are mixed so that the ratio of the mass of the second particles 20 to the mass of the first particles 10 is 1 or more and 7/3 or less.

Then the second binder 40 is added (step S3). Step S3 may be conducted during or after step S2 of coating with the second particles 20. Step S3 may be omitted.

In particular, for example, a second binder 40 composed of the aforementioned material is prepared. Powder containing the first particles 10, the first binder 30 coating the surfaces of the first particles 10, and the second particles 20 coating the surface of the first binder 30 is mixed with the second binder 40. Then the mixture of the second binder 40 and the powder is placed in a thermostat and heated.
In this manner, the second binder 40 can be melted and adhered to the surfaces of the second iron based particles 21. When drying is conducted in this state, as shown in Fig. 1, the second binder 40 can adhere to gaps such as gaps between the first and second particles 10 and 20. Step S3 may be omitted.

The metallurgical powder shown in Fig. 1 can be produced by carrying out steps S1 to S3 described above. A lubricant or the like may be mixed in addition.

Next, the advantage of the process of producing the metallurgical powder of this embodiment is described. As shown in Fig. 1, the surfaces of the first particles 10 (coarse particles) having a relatively large diameter are coated with the first binder 30 (step S1), and the surface of the first binder 30 is coated with the second particles 20 (fine particles) having a relatively small diameter (step S2). Thus, the second particles 20 adhere to the surfaces of the first particles 10 and aggregation of the second particles 20 can be suppressed. In other words, aggregation of the first particles 10 and aggregation of the second particles 20 can both be suppressed. Suppressing the aggregation of the second particles 20 can improve the flowability. Accordingly, the density of the compact prepared by compacting can be improved. Suppressing the aggregation of the first particles 10 can suppress the increase in the eddy current loss. As a result, the increase in iron loss of the compact prepared by compacting the metallurgical powder of this embodiment can be suppressed.

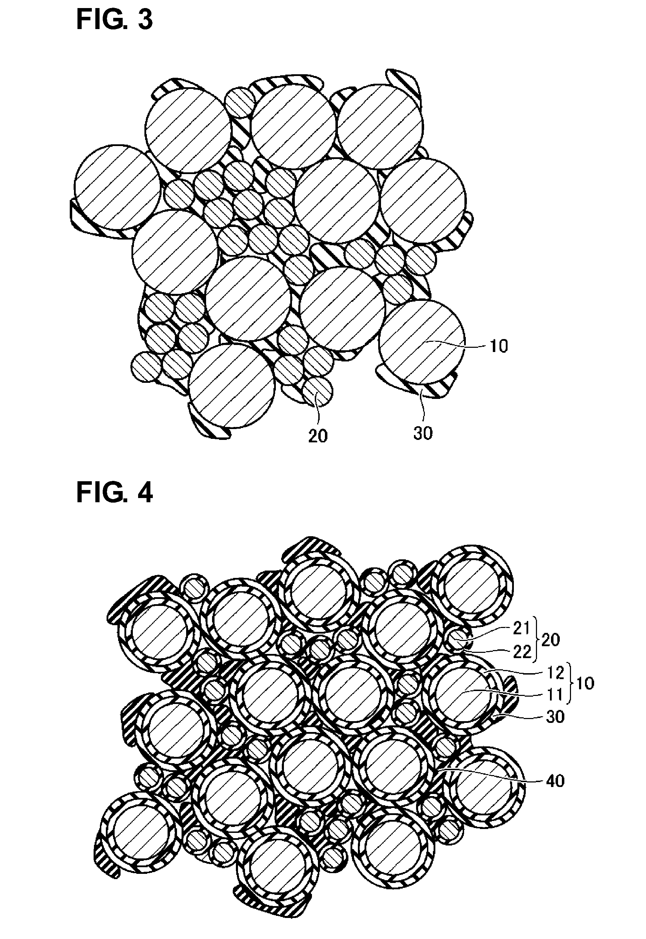

In contrast, as shown in Fig. 3, according to comparative examples such as one disclosed in PTL 1, first particles 10 having a relatively large diameter, second particles 20 having a relatively small diameter, and a first binder 30 are mixed. In such a case, as shown in Fig. 3, the first particles 10 aggregate with each other and the second particles 20 aggregate with each other. Aggregation of the first particles 10 increases the eddy current loss. Aggregation of the second particles 20 deteriorates the flowability. Moreover, when the first particles are aggregated, gaps are generated between the first particles 10. This decreases the density of the compact prepared by compacting.

As described above, the density can be improved and the increase in eddy current loss can be suppressed by carrying out step S1 of coating the surfaces of the first particles 10 with the first binder 30 and step S2 of coating the surface of the first binder 30 with the second particles 20 having a diameter smaller than that of the first particles 10.

Moreover, the homogeneity of the interior of the compact prepared by compacting the metallurgical powder of this embodiment can be improved, and generation of portions where magnetic fluxes can easily pass and portions where magnetic fluxes cannot easily pass (portions where fine particles are aggregated) can be suppressed. Accordingly, the decrease in magnetic permeability and deterioration of the superimposed characteristics can be suppressed.

### (Second Embodiment)

Metallurgical powder shown in Fig. 4 according to this embodiment has basically the same structure as the metallurgical powder of the first embodiment shown in Fig. 1 but differs therefrom in that the first and second particles 10 and 20 respectively include first and second iron based particles 11 and 21 and first and second insulating coated films 12 and 22 that surround the surfaces of the first and second iron based particles 11 and 21.

The first and second iron based particles 11 and 21 are the same as those of the first embodiment and the description therefor is omitted. In this embodiment, the average diameter of the first iron based particles 11 is preferably 30 to 500 µm. In this case, the coercive force can be reduced upon compacting. The average diameter is 500 µm or less because the eddy current loss can be decreased.

The first and second insulating coated films 12 and 22 function as insulating layers between the first and second iron based particles 11 and 21. When the first and second iron based particles 11 and 21 are respectively coated with the insulating coated films 12 and 22, the electric resistivity p of the dust core prepared by compacting the metallurgical powder can be increased. As a result, the eddy current loss of the dust core can be decreased by suppressing the eddy current from flowing between the first and second iron based particles 11 and 21.

The average film thickness of the first and second insulating coated films 12 and 22 is preferably 10 nm or more and 1 µm or less. When the average film thickness of the first and second insulating coated films 12 and 22 is 10 nm or more, the eddy current loss can be effectively suppressed. The average film thickness of the first and second insulating coated films 12 and 22 is 1 µm or less so that the shear fracture of the first and second insulating coated films 12 and 22 during compacting can be prevented. Moreover, since the ratio of the first and second insulting coated films 12 and 22 in the metallurgical powder is not excessively large, the flux density of a dust core obtained by compacting the metallurgical powder can be prevented from decreasing significantly.

The "average film thickness" refers to a thickness determined by deriving an equivalent thickness from a film composition determined by compositional analysis (transmission electron microscope energy dispersive X-ray spectroscopy, TEM-EDX) and element contents determined by inductively coupled plasma-mass spectrometry (ICP-MS) and confirming that the order of the equivalent thickness derived as such is a proper value by direct observation of the coated films using a TEM image.

The first and second insulting coated films 12 and 22 are preferably composed of at least one substance selected from the group consisting of a phosphate compound, a silicon compound, a zirconium compound, and a boron compound. These substances have a high insulating property and thus can effectively suppress the eddy current flowing between the first and second iron based particles 11 and 21. In particular, silicon oxide, zirconium oxide, or the like is preferably used. When a metal oxide containing a phosphate is used in the first and second insulting coated films 12 and 22, the thickness of the coating layers coating the surfaces of the first and second iron based particles 11 and 21 can be further decreased. As a result, the flux density of the first and second particles 10 and 20 can be increased, and magnetic properties can be improved.

The first and second insulting coated films 12 and 22 may be composed of a metal oxide, a metal nitride, a metal oxide, a metal phosphate compound, a metal borate compound, or a metal silicate compound that uses Fe, Al, Ti (titanium), Ca (calcium), Mn, Zn (zinc), Mg (magnesium), V (vanadium), Cr, Y (yttrium), Ba (barium), Sr (strontium), or a rare earth element as a metal.

The first and second insulting coated films 12 and 22 may be composed of an amorphous compound of a phosphate or borate of at least one element selected from the group consisting of Al, Si, Mg, Y, Ca, Zr (zirconium), and Fe.

The first and second insulting coated films 12 and 22 may be composed of an amorphous compound of an oxide of at least one substance selected from the group consisting of Si, Mg, Y, Ca, and Zr.

Although the description thereto is directed to the case in which the first and second particles 10 and 20 constituting the metallurgical powder each include a single layer of an insulating coated film, the first and second particles 10 and 20 constituting the metallurgical powder may each include a plurality of layers of insulating coated films.

Other features are substantially the same as those of the metallurgical powder of the first embodiment. The description therefor is thus omitted.

Next, a process for producing the metallurgical powder of this embodiment is described. The process for producing the metallurgical powder of this embodiment has basically the same features as the process for producing the metallurgical powder according to the first embodiment but differs in the following points. In step S1 of coating with the first binder 30 according to this embodiment, first particles 10 including first iron based particles 11 and insulating coated films 12 surrounding the surfaces of the first iron based particles 11 are used. In step S2 of coating with the second particles 20, second particles 20 including second iron based particles 21 and second insulating coated films 22 surrounding the surfaces of the second iron based particles 21 are used.

In particular, in step S1 of coating with the first binder 30, first, first iron based particles 11 are prepared as in the first embodiment. The first iron based particles may be heat-treated. Then the surfaces of the first iron based particles 11 are coated with the first insulating coated films 12. The first insulating coated films 12 can be formed by, for example, phosphating the first iron based particles 11. A solvent spraying method or a sol-gel treatment using a precursor may be used as the method for forming the first insulating coated films 12 composed of a phosphate other than the phosphating treatment. First insulating coated films 12 composed of a silicon-based organic compound may also be formed. In order to form these first insulating coated films 12, a wet coating treatment using an organic solvent, a direct coating treatment using a mixer, or the like may be employed. In this manner, first particles 10 including first iron based particles 11 with surfaces coated with the first insulating coated films 12 can be obtained.

In step S2 of coating with the second particles 20, second iron based particles 21 are prepared as in the first embodiment. The second iron based particles 21 may be heat-treated. Then the surfaces of the second iron based particles 21 are coated with second insulating coated films 22 by the same method as coating with the first insulating coated films 12. In this manner, second particles 20 including second iron based particles 21 with surfaces coated with the second insulating coated films 22 can be obtained.

In the case where first and second insulting coated films 12 and 22 each constituted by two or more layers are to be formed on the first and second iron based particles 11 and 21, first layers that surround the surfaces of the first and second iron based particles 11 and 21 and second layers that surround the first layers are formed. The first layers are preferably composed of at least one substance selected from the group consisting of an amorphous borate compound, an amorphous silicate compound, and an amorphous oxide and the second layers are preferably composed of at least one substance selected from the group consisting of a silicone resin and a metal oxide.

As described above, according to the process for producing the metallurgical powder of this embodiment, in step S1 of coating with the first binder 30, first particles 10 including first iron based particles 11 and first insulating coated films 12 surrounding the surfaces of the first iron based particles 11 are used, and, in step S2 of coating with the second particles 20, second particles 20 including the second iron based particles 21 and the second insulating coated films 22 surrounding the surfaces of the second iron based particles 21 are used.

The first and second insulting coated films 12 and 22 can electrically isolate between the first and second iron based particles 11 and 21 of the first and second particles 10 and 20. Accordingly, when the metallurgical powder is compacted, a dust core that has an improved density and a large electric resistivity in which the increase in eddy current loss is suppressed can be achieved. Accordingly, the metallurgical powder of this embodiment is suitable as a material for dust cores of general use, such as motor cores, solenoid valves, reactors, and electromagnetic components.

### (Third Embodiment)

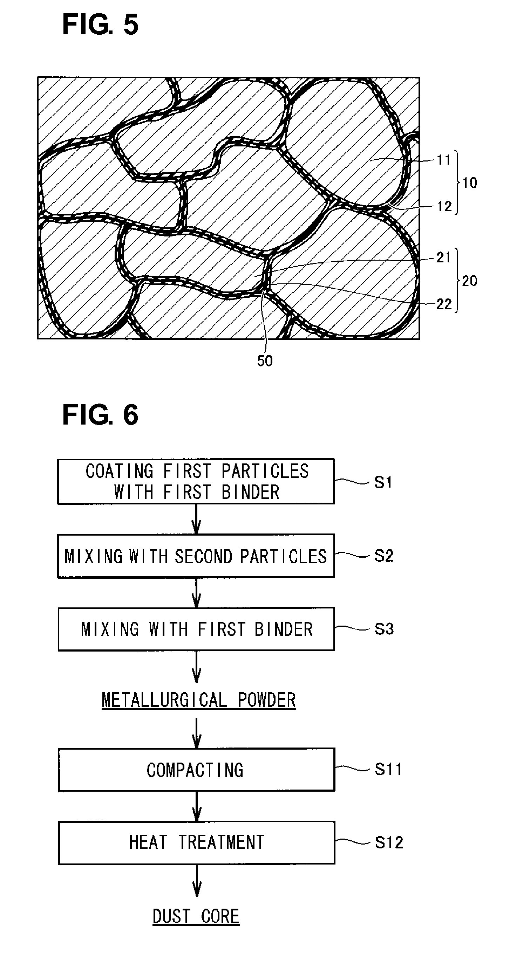

A dust core of this embodiment will now be described with reference to Fig. 5. As shown in Fig. 5, a dust core of this embodiment is prepared by compacting the metallurgical powder of the second embodiment.

As shown in Fig. 5, the dust core include first particles 10, first particles 20, and an insulator 50. According to the dust core of this embodiment, the first and second particles 10 and 20 including the first and second iron based particles 11 and 21 and the first and second insulting coated films 12 and 22 coating the surfaces of the first and second iron based particles 11 and 21 are bonded with one another through the insulator 50 or through interlocking of the recesses and protrusions of the first and second particles 10 and 20. The insulator 50 is the first and second binders 30 and 40 and the like that have been contained in the metallurgical powder and that have been transformed or have remained after the heat treatment.

Next, a process for producing the dust core of this embodiment is described. First, as shown in Fig. 6, the metallurgical powder of the second embodiment is produced (steps S1 to S3).

Next, as shown in Fig. 6, the metallurgical powder is compacted (compression forming) to form a compact (step S11).

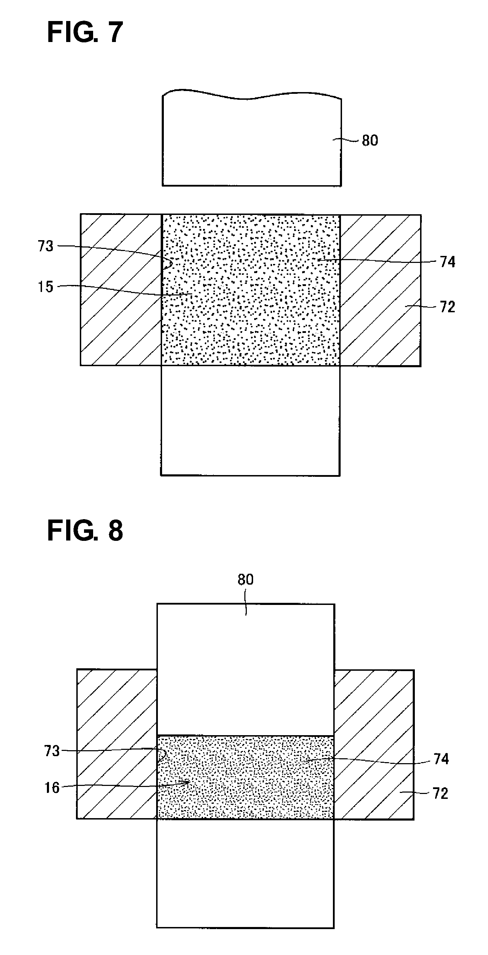

In particular, as shown in Fig. 7, a feeder (not shown) is positioned above a space 74 surrounded by an inner wall 73, and a metallurgical powder 15 produced in the second embodiment is fed from the feeder into the space 74. Preferably, a die 72 is heated to a temperature at which the second binder softens since this cancels the bridges between particles and the density can be readily increased.

As shown in Fig. 8, a top punch 80 is positioned above the space 74. The top punch 80 is moved downward and the metallurgical powder 15 is compacted at a pressure in the range of 300 to 1500 MPa, for example. The atmosphere in which the compacting is conducted is preferably an inert gas atmosphere or a reduced pressure atmosphere. In such a case, oxidation of metallurgical powder can be suppressed by oxygen in air.

A compact 16 obtained by compacting is removed from the space 74. The compact 16 obtained as such includes first and second particles 10 and 20 constituted by the first and second iron based particles 11 and 21 and the first and second insulting coated films 12 and 22 surrounding the surfaces of the first and second iron based particles 11 and 21.

In the compacting (step S3) according to this embodiment, the case in which the metallurgical powder is compacted while heating the die 72 (hot working) is described, the compacting is not limited to this. For example, the metallurgical powder may be compacted without heating the die (cold working). In this case, the temperature (maximum temperature) of the die rises to about 50°C.

Next, the compact is subjected to heat treatment as shown in Fig. 6 (step S12). Step S12 may be omitted.

In step S12, the compact 16 is heat-treated at a temperature equal to or higher than the decomposition temperature of the first and second binders 30 and 40 but lower than the decomposition temperature of the first and second insulting coated films 12 and 22 in air atmosphere. This temperature range is, for example, 400°C or more and 700°C or less. As a result, the first and second binders 30 and 40 are thermally decomposed and the residue, i.e., an insulator 50, remains.

A large number of strains (dislocations and defects) inside the compact 16 that have been generated during compacting can be removed by heat treatment in step S12.

When the first and second binders 30 and 40 are composed of at least one substance selected from the group consisting of a polyimide, a polyphenylene sulfide, a polyether ketone, a silicone resin, and a silsesquioxane, the remaining first and second binders 30 and 40 remain untransformed and protect the first and second insulting coated films 12 and 22 by conducting heat treatment of step S12.

When the first and second binders 30 and 40 are composed of at least one substance selected from the group consisting of a titanium-oxygen-based monomer, a titanium-oxygen-based oligomer, a silicon-oxygen-based monomer, and a silicon-oxygen-based oligomer, the remaining first and second binders 30 and 40 transform into oxides and protect the first and second insulting coated films 12 and 22 by conducting heat treatment of step S12.

Lastly, the compact 16 is subjected adequate working such as extrusion and cutting to complete production of the dust core. The dust core produced as such can be used as a product such as coil components, e.g., a choke coil, electronic components, e.g., a switching power supply element and a magnetic head, various motor components, solenoids, various magnetic sensors, and various magnetic valves.

Although the metallurgical powder of the second embodiment is used in this embodiment, the metallurgical powder of the first embodiment may be used. In such a case, a dust core is produced when first and second iron based particles 11 and 21 are insulated from each other by heat-treating the first and second binders 30 and 40, etc.

As described above, the process for producing a dust core of this embodiment includes steps S1 to S3 of producing a metallurgical powder by the process of producing the metallurgical powder described above and step S11 of compacting the metallurgical powder.

Thus, a dust core with an improved density in which the increase in eddy current loss is suppressed can be produced.

### EXAMPLES

In Examples, the effects achieved by step S1 of coating the surfaces of the first particles 10 with the first binder 30, and step S2 of coating the surface of the first binder 30 with the second particles 20 having a diameter smaller than that of the first particles 10 were investigated.

### EXAMPLE 1

A metallurgical powder of Example 1 was produced basically according to the second embodiment.

In particular, first, atomized Fe-Si alloy powder produced by EPSON ATMIX CORPORATION was prepared as the first particles 10 that contained the first iron based particles 11 and the first insulating coated films 12 coating the surfaces of the first iron based particles 11. The first iron based particles 11 contained 5.0% by mass of Si and the balance being Fe and unavoidable impurities (Fe-Si-based alloy) and had a particle diameter of 50 µm. The first insulating coated films were composed of amorphous iron phosphate. The powder deformability (ultimate elongation) of the first particles 10 was 0%.

Next, a first binder 30 was prepared by dissolving 0.5% by mass of highly adhesive silicone resin (TSR1516 produced by Momentive Performance Materials Inc.) relative to the weight of the first iron based particles 11 in a xylene solvent. The first binder 30 and the first iron based particles 11 were mixed. Xylene was evaporated under stirring to coat the surfaces of the first iron based particles 11 with the first binder 30 (step S1) The resulting first iron based particles 11 may be used as are but may be adequately thermally cured if the binder coating the particles is soluble in an ethanol solvent.

Next, atomized Fe-Si alloy powder produced by EPSON ATMIX CORPORATION was prepared as the second particles 20 that contained the second iron based particles 21 and the second insulating coated films 22 coating the surfaces of the second iron based particles 21. The second iron based particles 21 had the same composition as the first particles 10 and a particle diameter of 10 µm.

Next, the second iron based particles 21 were mixed so that the ratio of the second iron based particles 21 to the first iron based particles 11 was 7/3 (step S2). During this step, a binder prepared by dissolving a polyvinyl butyral (PVB) resin (polyvinyl butyral #3000 produced by DENKI KAGAKU KOGYO KABUSHIKI KAISHA) in an ethanol solvent was added (step S3). The metallurgical powder of Example 1 was thus prepared through steps S1 to S3 above.

### EXAMPLE 2

A process of producing a metallurgical powder of Example 2 was basically the same as Example 1 but differed therefrom in that the first and second iron based particles 11 and 21 contained 6.5% by mass of Si and the balance being the Fe and unavoidable impurities (Fe-Si-based alloy).

### EXAMPLE 3

A process of producing a metallurgical powder of Example 3 was basically the same as Example 2 but differed therefrom in that the first and second iron based particles 11 and 21 contained 9.5% by mass of Si, 5.5% by mass of Al, and the balance being the Fe and unavoidable impurities (Fe-Si-Al based alloy).

### COMPARATIVE EXAMPLES 1, 4, AND 7

Processes for producing metallurgical powder of Comparative Examples 1, 4, and 7 were respectively basically the same as those of Examples 1 to 3 but differed therefrom in that no second particles were contained.

In particular, first particles (coarse particles with a particle diameter of 50 µm) of Examples 1 to 3 were prepared as the first particles of Comparative Examples 1, 4, and 7, respectively. Then a binder was prepared by dissolving 0.5% by mass of highly adhesive silicone resin (TSR1516 produced by Momentive Performance Materials Inc.) and 0.5% by mass of PVB resin (polyvinyl butyral #3000 produced by DENKI KAGAKU KOGYO KABUSHIKI KAISHA) in a xylene solvent. The binder and the first particles were then mixed.

### COMPARATIVE EXAMPLES 2, 5, AND 8

Processes for producing metallurgical powder of Comparative Examples 2, 5, and 8 were respectively basically the same as those of Examples 1 to 3 but differed therefrom in that no first particles were contained.

In particular, the second particles (fine particles with a particle diameter of 10 µm) of Examples 1 to 3 were prepared as the second particles of Comparative Examples 2, 5, and 8, respectively. Then a binder was prepared by dissolving 0.5% by mass of highly adhesive silicone resin (TSR1516 produced by Momentive Performance Materials Inc.) and 0.5% by mass of PVB resin (polyvinyl butyral #3000 produced by DENKI KAGAKU KOGYO KABUSHIKI KAISHA) in a xylene solvent. The binder and the second particles were then mixed.

### COMPARATIVE EXAMPLES 3, 6, AND 9

Processes for producing metallurgical powder of Comparative Examples 3, 6, and 9 were respectively basically the same as those of Examples 1 to 3 but differed therefrom in that a binder was further added to the first and second particles mixed simultaneously.

In particular, the first and second particles of Examples 1 to 3 were prepared as the first and second particles of Comparative Examples 3, 6, and 9, respectively. A binder was prepared by dissolving 0.5% by mass of highly adhesive silicone resin (TSR1516 produced by Momentive Performance Materials Inc.) and 0.5% by mass of PVB resin (polyvinyl butyral #3000 produced by DENKI KAGAKU KOGYO KABUSHIKI KAISHA) in a xylene solvent.
Next, the first particles and the second particles were mixed so that the mass ratio of the second particles to the first particles was 7/3, and the binder prepared as above was further mixed.

As a result, metallurgical powder of Comparative Examples 3, 6, and 9 was produced. The metallurgical powder of Comparative Examples 3, 6, and 9 was in a state shown in Fig. 3.

### (Evaluation method)

A compact was prepared from the metallurgical powder of each of Examples 1 to 3 and Comparative Examples 1 to 9 by applying a pressure of 680 MPa in a die (step S11). Each compact was heat-treated in air for 1 hour at 300°C and then in a nitrogen-containing atmosphere for 1 hour at 750°C (step S12). As a result, compacts for evaluation, prepared by compacting the metallurgical powder of Examples 1 to 3 and Comparative Examples 1 to 9, were produced.

The compact density, the relative density, the eddy current loss, the hysteresis loss, the iron loss, the flux density, the magnetic permeability, the DC bias permeability, and the rate of decrease in DC bias permeability of these compacts were measured. The results are shown in Table below.

The compact density of the produced compacts was measured by an Archimedean method. A higher compact density is preferred.

The relative density was calculated by dividing the value of density measured by the Archimedean method with the measured value of density of an ingot having the same composition. A higher relative density is preferred.

One hundred fifty turns of primary winding and 20 turns of secondary winding were wound around each compact thus prepared, and the hysteresis loss, the eddy current loss, and the iron loss were measured by using an AC-BH tracer. In these measurements, the excitation flux density was 1 kG (= 0.1 T (tesla)) and the measurement frequency was 50 kHz. Separation of the hysteresis loss and the eddy current loss was done by calculating the hysteresis loss coefficient and the eddy current loss coefficient through fitting the frequency curve of the iron loss with the following three equations by a least squares method:

(Iron loss) = (Hysteresis loss) + (Eddy current loss)
(Hysteresis loss) = (Hysteresis loss coefficient) x (Frequency)
(Eddy current loss) = (Eddy current loss coefficient) x (Frequency)²
The values of the iron loss, the hysteresis loss, and the eddy current loss are preferably low.

The flux density was measured as a flux density B 1000 of a compact under application of a 12000 A/m magnetic field using a DC-BH curve tracer. A higher flux density is preferred.

As for the magnetic permeability, a permeability µA at a frequency of 50 kHz was measured by applying an AC magnetic field to the obtained compact at that frequency at room temperature. A higher permeability µA is preferred.

As for the DC bias permeability, a permeability µB at a frequency of 50 kHz was measured by applying an AC magnetic field to the obtained compact at that frequency at room temperature. A higher DC bias permeability µB is preferred.

The rate of decrease in DC bias permeability was calculated using the equation, (µB-µA)/µA. A smaller rate of decrease in DC bias permeability is preferred since it indicates less change.

**[Table]**

| | Composition | Compact density (g/cm³) | Relative Density (vol%) | Eddy current loss (w/kg) | Hysteresis loss (w/kg) | Iron loss (w/kg) | Flux density (T) | Magnetic permeability (-) | DC bias permeability (-) | Rate of decrease in DC bias permeability (%) |
|---|---|---|---|---|---|---|---|---|---|---|
| Example 1 | Fe-5.0Si | 6.62 | 87 | 638 | 688 | 1326 | 1.68 | 90 | 84 | -7 |
| Comparative Example 1 | Fe-5.0Si | 6.10 | 80 | 1537 | 658 | 2195 | 1.55 | 47 | 41 | -13 |
| Comparative Example 2 | Fe-5.0Si | 5.83 | 76 | 433 | 882 | 1315 | 1.48 | 38 | 34 | -11 |
| Comparative Example 3 | Fe-5.0Si | 6.44 | 84 | 801 | 702 | 1503 | 1.64 | 98 | 79 | -19 |
| Example 2 | Fe-6.5Si | 6.51 | 86 | 511 | 632 | 1143 | 1.63 | 116 | 106 | -9 |
| Comparative Example 4 | Fe-6.5Si | 6.02 | 79 | 1213 | 541 | 1754 | 1.51 | 62 | 52 | -16 |
| Comparative Example 5 | Fe-6.5Si | 5.76 | 76 | 290 | 740 | 1030 | 1.44 | 51 | 44 | -14 |
| Comparative Example 6 | Fe-6.5Si | 6.38 | 84 | 732 | 665 | 1397 | 1.60 | 126 | 95 | -25 |
| Example 3 | Fe-9.5Si-5. 5Al | 5.72 | 83 | 278 | 186 | 464 | 0.80 | 112 | 100 | -11 |
| Comparative Example 7 | Fe-9. 5Si-5. 5Al | 5.29 | 77 | 421 | 167 | 588 | 0.74 | 78 | 63 | -19 |
| Comparative Example 8 | Fe-9.5Si-5. 5Al | 4.98 | 72 | 135 | 203 | 338 | 0.70 | 32 | 27 | -16 |
| Comparative Example 9 | Fe-9.5Si-5. 5Al | 5.50 | 80 | 310 | 196 | 506 | 0.77 | 121 | 83 | -31 |

### (Measurement results)

Example 1 and Comparative Examples 1 to 3 that used Fe-5.0 Si as the first and second iron based particles of the first and second particles were compared. As shown in Table, Example 1 exhibited higher compact density and relative density than Comparative Examples 1 to 3, and a lower eddy current loss than Comparative Example 2 that used coarse particles only and Comparative Example 3 that used mixed fine and coarse particles although the eddy current loss was higher than that of Comparative Example 2 that used fine particles only.

Example 2 and Comparative Examples 4 to 6 that used Fe-6.5 Si was used as the first and second iron based particles of the first and second particles were compared. Example 2 exhibited higher compact density and relative density than Comparative Examples 4 to 6. Example 1 exhibited a lower eddy current loss than Comparative Example 4 that used coarse particles only and Comparative Example 6 that used mixed fine and coarse particles although the eddy current loss was higher than that of Comparative Example 5 that used fine particles only.

Example 3 and Comparative Example 7 to 9 that used Fe-9.5 Si-5.5 Al as the first and second iron based particles of the first and second particles were compared. Example 3 exhibited higher compact density and relative density than Comparative Examples 7 to 9. Example 1 exhibited a lower eddy current loss than Comparative Example 7 that used coarse particles only and Comparative Example 9 that used mixed fine and coarse particles although the eddy current loss was higher than that of Comparative Example 8 that used fine particles only.

Since Examples 1 to 3 maintained a low eddy current loss, they also maintained a low iron loss.
Respectively compared to Comparative Examples 1 to 3, 4 to 6, and 7 to 9, Examples 1 to 3 exhibited an improved flux density, maintained a high magnetic permeability, and had an improved DC bias permeability and a lower rate of decrease in DC bias permeability.

A high magnetic permeability is achieved probably due to a high density. In particular, because aggregation of the coarse first particles was suppressed and generation of large gaps was suppressed, the magnetic permeability was improved.

Examples above confirm that when the first and second particles are composed of the same material and step S1 of coating the surfaces of the first particles 10 with the first binder 30 and step S2 of coating the surface of the first binder 30 with the second particles 20 having a particle diameter smaller than the first particles 10 are provided, the density of the compact can be improved and the low eddy current loss can be maintained. Moreover, it has been confirmed that when the first and second particles are composed of the same material and step S1 of coating the surfaces of the first particles 10 with the first binder 30 and step S2 of coating the surface of the first binder 30 with the second particles 20 having a particle diameter smaller than that of the first particles 10 are provided, a metallurgical powder that can produce a compact that has various favorable properties can be produced.

The embodiments and examples disclosed herein are exemplary in all respect and should not be construed to limit the disclosure. The scope of the present invention is defined not by the embodiments and examples presented above but by Claims, and should be construed to include equivalents to the scope of the Claims and all modifications and alterations within the scope of the Claims.

### Reference Signs List

- 10: first particles
- 11: first iron based particle
- 12: first insulating coated film
- 15: metallurgical powder
- 16: compact
- 20: second particle
- 21: second iron based particle
- 22: second insulating coated film
- 30, 40: binder
- 50: insulator
- 72: die
- 73: inner wall
- 74: space
- 80: top punch

## Claims

1. A process for producing metallurgical powder, the process comprising:
a step of coating surfaces of a plurality of first particles with a first binder; and
a step of coating a surface of the first binder with a plurality of second particles having a particle diameter smaller than a particle diameter of the plurality of first particles.

2. The process for producing metallurgical powder according to Claim 1, wherein, in the step of coating with the second particles, a plurality of second particles that have a particle diameter one fifth or less of the particle diameter of the first particles are used.

3. The process for producing metallurgical powder according to Claim 1, further comprising a step of adding a second binder during or after the step of coating with the second particles.

4. The process for producing metallurgical powder according to any one of Claims 1 to 3, wherein, in the step of coating with the first binder, the first particles including first iron based particles and first insulated coated films surrounding the surfaces of the first iron based particles are used, and
in the step of coating with the second particles, the second particles including second iron based particles and second insulating coated films surrounding the surfaces of the second iron based particles are used.

5. A process for producing a dust core, comprising:
a step of producing metallurgical powder by the process for producing metallurgical powder according to any one of Claims 1 to 4; and
a step of compacting the metallurgical powder.

6. A dust core produced by the process for producing a dust core according to Claim 5.

7. A coil component comprising the dust core according to Claim 6.
